# FASCICULE DE BREVET EUROPEEN

(11) **EP 4 066 163 B1**
(45) Date de publication et mention de la délivrance du brevet: **06.09.2023**
(21) Numéro de dépôt: 20807065.6
(22) Date de dépôt: 19.11.2020
(51) Int. Cl.: G06K 19/02, G06K 19/077, B65H 16/00

(54) **SYSTÈME DE PRÉPARATION D'ÉTIQUETTE DE RADIO-IDENTIFICATION ET PROCÉDÉ ASSOCIÉ**
SYSTEM ZUM HERSTELLEN EINES RADIOFREQUENZ-IDENTIFIKATIONSETIKETTS UND ZUGEHÖRIGES VERFAHREN
SYSTEM FOR PREPARING A RADIOFREQUENCY IDENTIFICATION TAG AND ASSOCIATED METHOD

(30) Priorité: 26.11.2019 FR 1913203
(43) Date de publication de la demande: 05.10.2022
(73) Titulaire: HID Textile Services SARL, 13600 La Ciotat (FR)
(72) Inventeur: BRUNEL, Jean-Victor, 13420 GEMENOS (FR); ALLARIA-BARDY, Bastien, 13012 MARSEILLE (FR)
(74) Mandataire: Hautier IP
(86) Numéro de dépôt international: PCT/EP2020/082741
(87) Numéro de publication internationale: WO 2021/104997

(56) Documents cités:
- EP-A2- 2 340 513
- EP-B1- 2 340 513
- US-A1- 2009 126 861

## Description

### DOMAINE TECHNIQUE

La présente invention concerne le domaine des systèmes de préparation d'étiquette de radio-identification. Elle trouve pour application particulièrement avantageuse l'automatisation de l'intégration d'étiquettes de radio-identification sur un support, et notamment des textiles.

### ÉTAT DE LA TECHNIQUE

Les étiquettes de radio-identification, aussi désignées étiquettes RFID (abrégé de l'anglais *radio frequency identification,* pouvant être traduit par identification par radio-fréquence), peuvent être utilisées pour identifier, suivre, voire analyser l'usage du support sur lequel elles sont fixées.

Plus particulièrement, les hôpitaux ou les hôtels ont souvent recours à des étiquettes RFID pour identifier et suivre les linges, comme les draps de lit, les taies d'oreiller et les serviettes, lors de leur utilisation et ensuite pour leur nettoyage en blanchisserie.

Dans ce contexte, les étiquettes RFID sont conçues et fixées sur un linge pour supporter de façon durable une utilisation quasi-continue, et un nettoyage intensif du linge dans des procédés de lavage contraignants, notamment en termes de pression, de température, et de produits chimiques utilisés.

Il existe des procédés de préparation d'étiquette RFID. Selon un premier exemple, le document FR 3012682 (A1) décrit un procédé de fabrication d'une étiquette RFID pour des linges devant supporter les cycles de blanchisserie industrielle. Selon un deuxième exemple. Selon un deuxième exemple, le document WO 2017/195970 (A1) décrit un procédé de fabrication d'une étiquette RFID pouvant être disposée sur un tissu.

À l'issue de cette fabrication, les étiquettes RFID sont généralement placées et fixées sur les linges de façon manuelle, par des opérateurs. Ces opérations peuvent avoir lieu soit lors de la fabrication des linges, soit par le propriétaire des linges, par exemple au niveau des hôpitaux ou des hôtels. Le placement manuel, voire la fixation manuelle de l'étiquette, RFID présente toutefois l'inconvénient d'être long et coûteux. Le résultat dépend en outre de la qualification de l'opérateur en charge de cette opération. Il peut donc se produire des erreurs pouvant augmenter encore le coût des procédés de préparation d'étiquette RFID.

Le document EP 2340513 A2 divulgue un système de transfert d'étiquettes RFID sur un objet, dans lequel les étiquettes sont supportées par une bande continue.

Le document US 2009/126861 A1, divulgue un système de formation d'étiquettes RFID sur un emballage, comprenant un système de déroulement d'une bande support et un organe de pelage en combinaison avec un organe presseur.

Un objectif de la présente invention est donc de proposer un système facilitant l'automatisation de la préparation d'étiquette RFID, et plus particulièrement en vue de sa fixation sur un support.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, selon un premier aspect de l'invention on prévoit comme définit par la revendication 1 un système de préparation d'étiquette de radio-identification en vue d'une fixation sur un support, caractérisé en ce qu'il comprend un dispositif de placement d'au moins une étiquette de radio-identification, configuré de façon à placer l'étiquette sur le support, le dispositif de placement comprenant :
- un organe de déplacement mobile entre une position de chargement et une position de placement, la position de placement étant distincte de la position de chargement, et
- un organe de maintien présentant une configuration de libération de l'étiquette, et une configuration de maintien de l'étiquette, l'organe de maintien étant dans la configuration de maintien de l'étiquette lors d'un mouvement de l'organe de déplacement entre la position de chargement et la position de placement.

Ainsi, le système permet le positionnement de l'étiquette sur le support par le mouvement de l'organe de déplacement, tout en assurant le maintien de l'étiquette. Dès lors, le système permet d'aller plus loin dans l'automatisation de la préparation de l'étiquette que les solutions existantes. Plus particulièrement, le système permet d'automatiser le placement de l'étiquette en vue de sa fixation sur le support, par exemple un textile.

De façon avantageuse, le système peut être utilisé dans un procédé standard de fabrication du support. Le système peut par exemple être monté de façon additionnelle sur une ligne de fabrication du support. Le système peut en alternative ou en complément être utilisé pour l'étiquetage du support après sa fabrication, et notamment par le propriétaire du support.

De façon avantageuse, on peut prévoir un système de préparation d'étiquette de radio-identification en vue d'une fixation sur un support, caractérisé en ce que en ce que le système comprend un dispositif de fourniture d'au moins une étiquette de radio-identification, le dispositif de fourniture comprenant :
- un organe d'entrainement configuré pour entrainer, selon une première direction d'entrainement, un ruban d'étiquettes,
- un organe d'orientation du ruban d'étiquettes, comprenant un renvoi d'angle disposé selon un axe non perpendiculaire à la première direction d'entrainement, de façon à orienter le ruban d'étiquettes selon une deuxième direction d'entrainement distincte de la première direction d'entrainement.

À partir de la bobine, un ruban d'étiquettes peut ainsi être déroulé et orienté de façon automatisée vers un autre dispositif du système, voire vers un autre système. Dès lors, le système permet d'aller plus loin dans l'automatisation de la préparation de l'étiquette que les solutions existantes. Notamment, le système permet d'automatiser, suite à la fabrication de l'étiquette, la préparation d'étiquette de radio-identification en vue d'une fixation sur le support, tel qu'un textile.

Le système peut en outre comprendre un dispositif de placement, et plus particulièrement un organe de maintien, présentant une configuration de libération de l'étiquette, et une configuration de maintien de l'étiquette, l'organe d'orientation étant configuré pour coopérer avec le dispositif de placement de façon à lui fournir l'étiquette. De préférence, la première direction d'entrainement et la deuxième direction d'entrainement sont orthogonales. Le dispositif de placement peut en outre comprendre l'organe de déplacement selon les caractéristiques précédemment énoncées.

Selon un deuxième aspect de l'invention tel que définit par la revendication 15, on prévoit un procédé de préparation d'étiquette de radio-identification en vue d'une fixation sur un support, par un système de préparation d'étiquette de radio-identification selon le premier aspect de l'invention, le procédé comprenant :
- une fourniture d'au moins une étiquette de radio-identification à un dispositif de placement, le dispositif de placement comprenant un organe de déplacement dans une position de chargement et un organe de maintien dans une configuration de libération de l'étiquette, puis
- un passage de l'organe de maintien de la configuration de libération à une configuration de maintien de l'étiquette, puis
- un mouvement de l'organe de déplacement de la position de chargement à une position de placement, la position de placement étant distincte de la position de chargement, de façon à positionner l'étiquette sur le support.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures 1A et 1B représentent une vue d'ensemble du système en position de chargement et dans la configuration de libération de l'étiquette, selon un mode de réalisation de l'invention.
La figure 2 représente une vue d'ensemble du système, en position de placement et dans la configuration de maintien de l'étiquette, selon le mode de réalisation illustré en figures 1A et 1B.
La figure 3 représente une vue détaillée d'une partie du dispositif de placement, du système illustré en figures 1A et 1B.
La figure 4 représente une vue détaillée d'une partie du dispositif de placement, et dans la configuration d'éjection de l'étiquette, du système illustré en figures 1A et 1B.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions et les distances relatives entre les éléments du système ne sont pas nécessairement représentatives de la réalité.

### DESCRIPTION DÉTAILLÉE

Avant d'entamer une revue détaillée de modes de réalisation des différents aspects de l'invention, sont énoncées ci-après des caractéristiques optionnelles du premier et du deuxième aspect de l'invention, qui peuvent éventuellement être utilisées en association ou alternativement :
- l'organe de déplacement peut comprendre au moins un actionneur solidaire de l'organe de maintien, l'actionneur linéaire étant au moins en partie mobile en translation entre la position de chargement et la position de placement, de façon à déplacer l'organe de maintien entre la position de chargement et la position de placement. L'actionneur linéaire positionne ainsi l'étiquette de façon reproductible et précise sur le support, et plus particulièrement en vue de sa fixation sur le support. De préférence, l'actionneur linéaire est un vérin,
- l'organe de maintien peut comprendre une mâchoire s'étendant transversalement selon une direction de chargement de l'étiquette, la mâchoire comprenant un premier membre et un deuxième membre espacés d'une première distance perpendiculaire à la direction de chargement lorsque l'organe de maintien est dans la configuration de libération, de sorte que l'étiquette s'insère dans la mâchoire, le premier membre et le deuxième membre étant espacés d'une deuxième distance perpendiculaire à la direction de chargement lorsque l'organe de maintien est dans la configuration de maintien, de façon à tenir l'étiquette, la première distance étant supérieure à la deuxième distance,
- le premier membre et le deuxième membre de la mâchoire peuvent chacun être configurés de sorte qu'au moins l'un parmi le premier membre et le deuxième membre présente un degré de liberté en flexion par rapport à l'autre membre, sur au moins un intervalle angulaire,
- au moins une parmi la longueur et la largeur du premier membre et du deuxième membre peut être inférieure à au moins une parmi la longueur et la largeur correspondante de l'étiquette,
- l'organe de maintien peut comprendre au moins un actionneur linéaire dont une première portion, voire une première extrémité, est mobile en translation de façon à être en appui sur au moins un parmi le premier membre et le deuxième membre, lorsque l'organe de maintien est dans la configuration de maintien,
- l'organe de maintien peut comprendre en outre une plaque coulissante mobile en translation par rapport à la mâchoire selon une direction parallèle au mouvement de translation entre la position de chargement et la position de placement, l'organe de déplacement comprenant un actionneur linéaire solidaire d'au moins une partie de la mâchoire, et un actionneur linéaire solidaire de la plaque coulissante,
- l'organe de maintien peut comprendre une mâchoire s'étendant transversalement selon une direction de chargement de l'étiquette, la deuxième direction d'entrainement est parallèle, et de préférence confondue, avec la direction de chargement de l'étiquette. Par coopération entre le dispositif de fourniture et le dispositif de placement, le système permet de faciliter encore l'automatisation de la préparation d'étiquette, en vue de la fixation sur le support,
- le dispositif de fourniture peut comprendre en outre un module de détection d'une zone interstitielle entre deux étiquettes successives du ruban d'étiquettes,
- lequel le dispositif de fourniture peut comprendre en outre un organe de découpe du ruban d'étiquettes, configuré pour coopérer avec le module de détection de façon à découper le ruban d'étiquettes au niveau de la zone interstitielle,
- l'organe de découpe peut être disposé entre le module de détection et l'organe de maintien, et configuré pour s'actionner lorsque l'organe de maintien est dans la configuration de maintien de l'étiquette,
- l'organe d'entrainement peut comprendre un moteur piloté pour entrainer le ruban d'étiquettes à une première vitesse et à une deuxième vitesse, la première vitesse étant supérieure à la deuxième vitesse, de sorte qu'après avoir déplacé l'étiquette sur une distance, ladite distance étant de préférence inférieure à une longueur d'une étiquette, le ruban d'étiquettes est entrainé à la deuxième vitesse jusqu'à la détection de la zone interstitielle,
- le dispositif de fourniture peut comprendre en outre un module de vérification configuré pour détecter un défaut de l'étiquette, le dispositif de placement étant configuré pour éjecter l'étiquette du système lorsque le défaut est détecté par le module de vérification. Le module de vérification est de préférence configuré pour détecter une marque caractéristique d'un défaut de l'étiquette.

Dans la suite de la description, il sera fait usage de termes tels que « vertical », « horizontale », « longitudinal », « transversal », « supérieur », « inférieur ». Ces termes doivent être interprétés de façon relative en relation avec la position du système de préparation d'étiquette dans le repère illustré sur les figures. Par exemple, « supérieur » et « inférieur » s'entendre par rapport à l'axe z, un élément supérieur à un autre élément étant disposé dans un plan situé au-dessus du plan de cet autre élément par rapport à l'axe z.

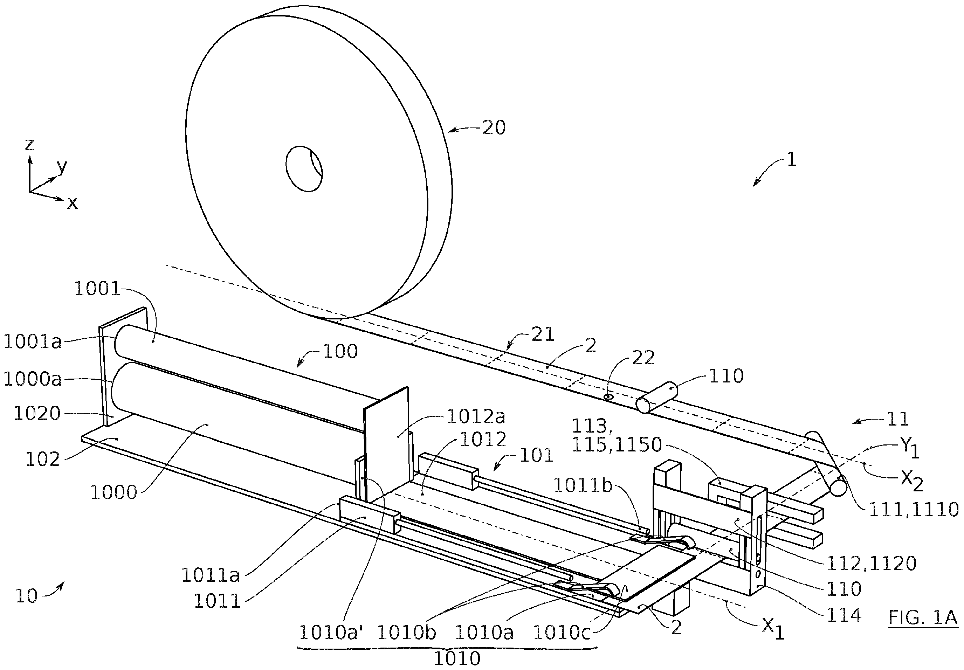

Le système 1 de préparation d'étiquette RFID selon un mode de réalisation particulier est maintenant décrit en référence aux figures 1A à 4.

Le système 1 est configuré de façon à permettre le placement d'une étiquette 2 RFID sur un support 3. Le support 3 peut plus particulièrement être un textile, tel qu'un linge de lit ou un linge de toilette. Lors, ou suite, au placement de l'étiquette 2, cette étiquette 2 peut être fixée au support 3, par exemple par couture ou thermocollage. Ainsi, le support 3 peut être identifié, voire suivi par radio-identification.

Le système 1 peut comprendre pour cela un dispositif de fourniture 11 de l'étiquette et/ou un dispositif de placement 10 de l'étiquette 2. Lorsque le système 1 comprend le dispositif de fourniture 11 de l'étiquette et le dispositif de placement 10, ces deux dispositifs peuvent coopérer l'un avec l'autre de sorte que le dispositif de fourniture 11 fournisse l'étiquette 2 au dispositif de placement 10, ce dernier pouvant alors placer l'étiquette 2 sur le support 3.

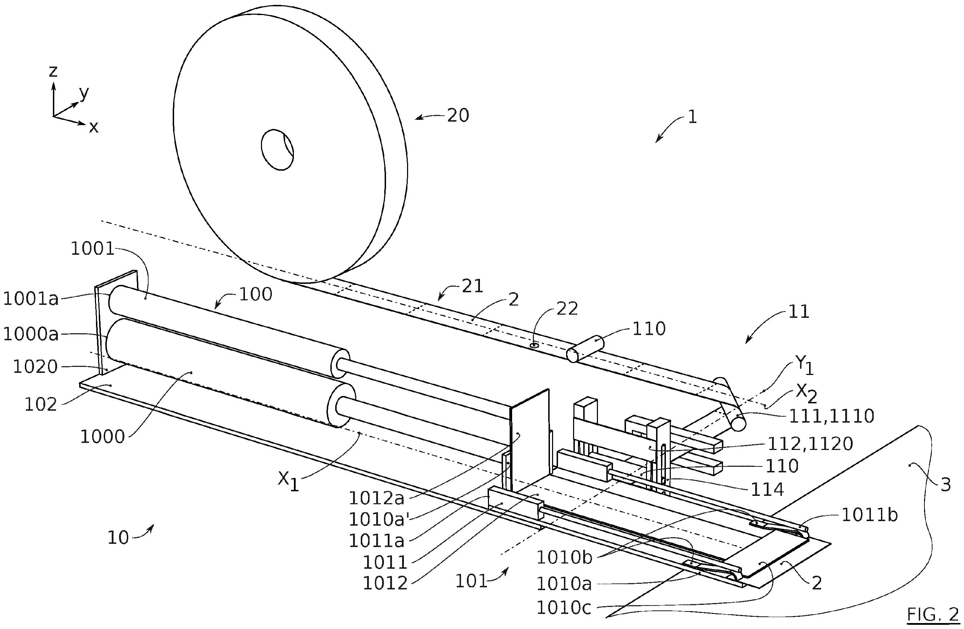

Le dispositif de placement 10 de l'étiquette est tout d'abord décrit en détail selon un mode de réalisation du système 1 et permet la libération et le placement de l'étiquette 2 sur le support 3 selon un mode de réalisation du procédé de préparation d'étiquette. Le dispositif de placement 10 de l'étiquette 2, comprend un organe de déplacement 100 et un organe de maintien 101 de l'étiquette. Cet organe de déplacement 100 est mobile entre une position de chargement et une position de placement de l'étiquette 2. Dans la position de chargement, l'organe de déplacement 100 est plus particulièrement configuré de sorte que l'étiquette puisse être chargée dans l'organe de maintien 101, comme illustré par exemple en figure 1A. La position de placement, distincte de la position de chargement, correspond à une position dans laquelle l'étiquette peut être placée sur le support 3, comme illustré en figure 2. L'organe de déplacement 100 est solidaire de l'organe de maintien 101, et déplace ainsi l'organe de maintien 101 entre la position de chargement et la position de placement.

L'organe de maintien 101 présente une configuration de libération de l'étiquette 2, dans laquelle l'étiquette 2 n'est pas maintenue par l'organe de maintien 101, et une configuration de maintien de l'étiquette 2, dans laquelle l'étiquette 2 est maintenue par l'organe de maintien 101.

La cinématique d'action du dispositif de placement 10 peut être décrite de la façon suivante. Une étiquette 2 peut tout d'abord être fournie au dispositif de placement 10 lorsque l'organe de déplacement 100 est dans la position de chargement, et lorsque l'organe de maintien 101 est dans la position de libération. L'organe de maintien 101 peut ensuite être passé dans sa configuration de maintien de l'étiquette 2. L'organe de déplacement 100 peut ensuite déplacer l'organe de maintien 101 de la position de chargement à la position de placement. L'organe de maintien 101 peut alors être passé dans sa position de libération, de façon à laisser l'étiquette 2 à l'endroit voulu du support 3. L'organe de déplacement 100 peut ensuite ramener l'organe de maintien 101 à la position de chargement. Une étiquette 2 suivante peut alors être prise en charge par le système 1.

Selon l'exemple illustré par les figures 1A et 2, l'organe de déplacement 100 peut être mobile en translation entre la position de chargement et la position de placement, selon la direction x₁. Pour cela, l'organe de déplacement 100 peut comprendre un actionneur linéaire 1000, par exemple un vérin. La position de chargement est de préférence une position rétractée de l'actionneur linéaire 1000, et la position de placement est de préférence une position étendue de l'actionneur linéaire 1000. Cet actionneur peut être monté par une première portion, et de préférence par une première extrémité 1000a, à un châssis 102 du dispositif de placement 10, et plus particulièrement une paroi 1020 du châssis 120, le châssis 102 restant fixe lors du mouvement de l'organe de déplacement 100. L'actionneur linéaire 1000 peut être monté par une deuxième portion, et de préférence par une deuxième extrémité 1000b, à au moins une partie de l'organe de maintien 101.

Pour maintenir l'étiquette 2, l'organe de maintien 101 peut comprendre une mâchoire 1010. Cette mâchoire 1010 peut s'étendre transversalement selon une direction de chargement y₁ de l'étiquette dans le dispositif de placement 10. La direction de chargement y₁ est de préférence distinct de la direction du mouvement de translation x₁ de l'organe de déplacement, et de préférence orthogonale, voire perpendiculaire, à cette direction x₁.

En outre, la mâchoire 1010 peut comprendre un premier membre 1010a, de préférence un membre inférieur, et un deuxième membre 1010b, de préférence un membre supérieur, entre lesquels l'étiquette 2 peut être insérée lorsque l'organe de maintien 100 est dans la configuration de libération. À titre illustratif, on décrit dans la suite le mode de réalisation particulier dans lequel la mâchoire comprend un membre inférieur 1010a et un membre supérieur 1010b. De préférence, la mâchoire 1010 est configurée de façon à tenir l'étiquette 2 par son épaisseur lorsque l'organe de maintien 101 est dans la configuration de maintien.

Pour cela, le membre inférieur 1010a et le membre supérieur 1010b peuvent être verticalement espacés d'une première distance, c'est-à-dire selon l'axe z perpendiculaire à la direction de chargement y₁. La première distance est alors supérieure à l'épaisseur de l'étiquette 2, de façon à autoriser le passage de l'étiquette 2 entre les membres 1010a, 1010b de la mâchoire 1010. Dans la configuration de maintien, le membre inférieur 1010a et le membre supérieur 1010b peuvent être verticalement espacés d'une deuxième distance inférieure à l'épaisseur de l'étiquette 2, de façon à bloquer l'étiquette 2 entre les membres 1010a, 1010b de la mâchoire 1010.

Pour éloigner ou rapprocher les membres 1010a, 1010b de la mâchoire 1010, les membres 1010a, 1010b sont configurés de sorte qu'au moins l'un parmi le membre inférieur 1010a et le membre supérieur 1010b présente un degré de liberté en flexion par rapport à l'autre membre, sur au moins un intervalle angulaire. Ainsi, l'organe de maintien 101 est configuré de façon similaire à une pince pouvant libérer ou maintenir l'étiquette 2 selon la distance entre ces deux membres 1010a, 1010b. Par un mouvement de flexion, le premier membre 1010a et le deuxième membre 1010b de la mâchoire peuvent être rapprochés jusqu'à ce qu'ils entrent en contact avec l'étiquette 2. Le système 1 est ainsi adapté pour la préparation automatisé d'étiquettes RFID de différentes épaisseurs. Au moins l'un parmi le membre inférieur 1010a et le membre supérieur 1010b peut notamment être contraint en flexion par l'appui d'au moins un actionneur linéaire 1011. De préférence, l'au moins un membre déformable en flexion est formé d'un matériau déformable élastiquement, par exemple en métal. Ainsi, lorsque l'actionneur linéaire 1011 n'est pas en appui l'appui sur le membre, l'organe de maintien passe de la configuration de maintien à la configuration de libération par retour élastique du membre déformable en flexion à sa position non contrainte.

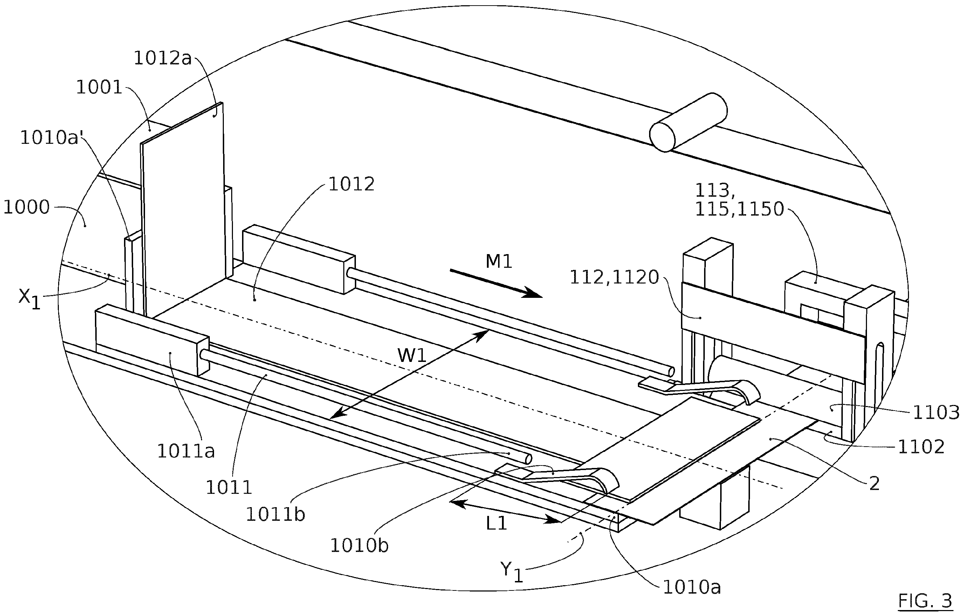

Selon l'exemple illustré dans la figure 3, un premier vérin 1000 est solidaire du membre inférieur 1010a de la mâchoire 1010, et plus particulièrement par la paroi 1010a' du membre inférieur 1010a. Le membre inférieur 1010a est plus particulièrement formé par une plaque s'étendant sur une largeur W1 selon la direction y₁. Le membre supérieur 1010b est formé par une paire de languettes 1010b, fixées sur le membre inférieur 1010a, et s'étendant selon la direction x sur une longueur L1.

Selon cet exemple, une paire de vérins aiguilles 1011 présentent un corps par lequel ils sont montés par une première extrémité 1011a sur le membre inférieur 1010a. La deuxième extrémité 1011b de chaque vérin aiguille 1011 est l'extrémité d'une tige de vérin, disposée de façon à ne pas contraindre en flexion le membre supérieure 1010b lorsque l'organe de maintien 101 est dans la configuration de libération. Lorsque l'organe de maintien 101 est dans la configuration de maintien, chaque vérin aiguille 1011 peut se déployer en translation selon la direction x₁, comme illustré par la flèche M1, de façon à mettre en appui leur deuxième extrémité 1011b sur la paire de languettes 1010b, pour les contraindre en flexion, et ainsi rapprocher les deux membres 1010a, 1010b.

La mâchoire 1010 peut en outre comprendre un guide de chargement 1010c s'étendant selon la direction y₁ entre les deux languettes 1010b, pour assurer un coulissement de l'étiquette 2 selon la direction de chargement y₁, d'une languette à l'autre.

En outre, les dimensions de l'organe de maintien 101 peuvent être choisies de sorte qu'au moins une bordure de l'étiquette 2 est libre, notamment lorsque l'organe de maintien 101 est dans sa configuration de maintien. Ainsi, la fixation de l'étiquette 2 par sa bordure restée libre est facilitée. Selon l'exemple illustré dans la figure 3, la largeur W1 du membre inférieur 1010a peut être inférieure à la longueur de l'étiquette. De façon alternative ou complémentaire, la mâchoire 1010 peut être configurée de sorte que la largeur de la portion de l'étiquette 2 destinée à être insérée entre le membre inférieur 1010a et le membre supérieur 1010b est inférieure à la largeur totale de l'étiquette 2.

Les dimensions de l'organe de maintien 101 peuvent en outre être choisies pour faciliter son insertion entre deux supports 3, et notamment entre deux tissus. L'épaisseur de l'organe de maintien est par exemple de 6,5 mm.

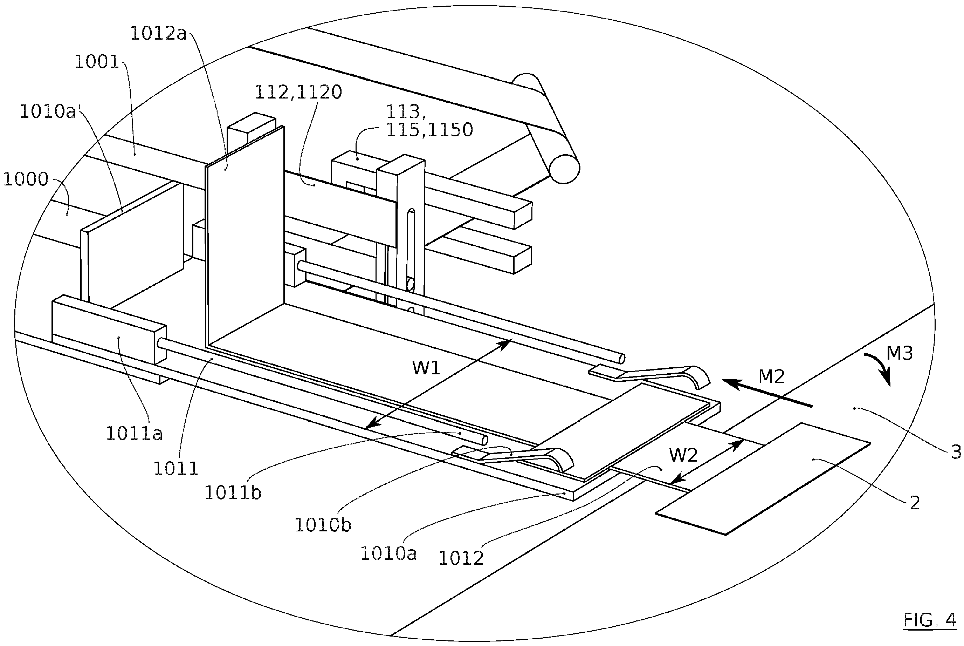

L'organe de maintien 101 peut en outre comprendre une plaque coulissante 1012, configurée pour être mobile relativement à la mâchoire 1010, et plus particulièrement par rapport au moins l'un parmi le membre inférieur 1010a et le membre supérieur 1010b. La plaque coulissante 1012 peut notamment être mobile en translation relativement à la mâchoire 1010, selon la direction x₁. Lorsque la mâchoire 1010 est déplacée en translation de la position de placement à la position de chargement, selon la direction indiquée par la flèche M2 illustrée par exemple par la figure 4, l'organe de maintien 101 étant dans la configuration de libération, la plaque coulissante 1012 peut rester fixe au moins sur une portion du mouvement de la position de placement à la position de chargement. Ainsi, la plaque coulissante 1012 peut être positionnée au-delà de la position de la mâchoire 1010. Cette avancée de la plaque coulissante 1012 peut favoriser le basculement de l'étiquette 2, par exemple comme illustré par la flèche M3, et faciliter la libération de l'étiquette 2 et donc sa dépose. Le risque que l'étiquette soit entrainée lors de la rétractation de l'organe de déplacement 100 est minimisé, voire évité.

En outre, le guide de chargement 1010c peut guider le mouvement en translation de la plaque coulissante 1012, et ainsi limiter, voire empêcher, un mouvement de cette dernière dans la direction z lors de la dépose de l'étiquette. Par ailleurs, si l'étiquette est fixée au support lorsque l'organe de déplacement est dans la position de placement, le risque d'arrachement de l'étiquette lors de la rétractation de l'organe de déplacement 100 est minimisé, voire évité.

Selon l'exemple illustré dans la figure 4, la plaque coulissante 1012 s'étend sur une largeur W2 selon la direction y₁, sa largeur W2 étant inférieure à la largeur W1 du membre inférieur 1010a. La plaque coulissante 1012 peut être disposée entre les deux vérins aiguilles 1011 ainsi qu'entre les languettes du membre supérieur 1010b. La plaque coulissante peut en outre être disposée entre le membre inférieure 1010a et le guide de coulissement 1010c. L'étiquette 2 peut donc être insérée entre le membre inférieur 1010a et le guide de coulissement 1010c, de sorte que la plaque coulissante 1012 applique un effort de poussée de l'étiquette 2 suivant sa tranche.

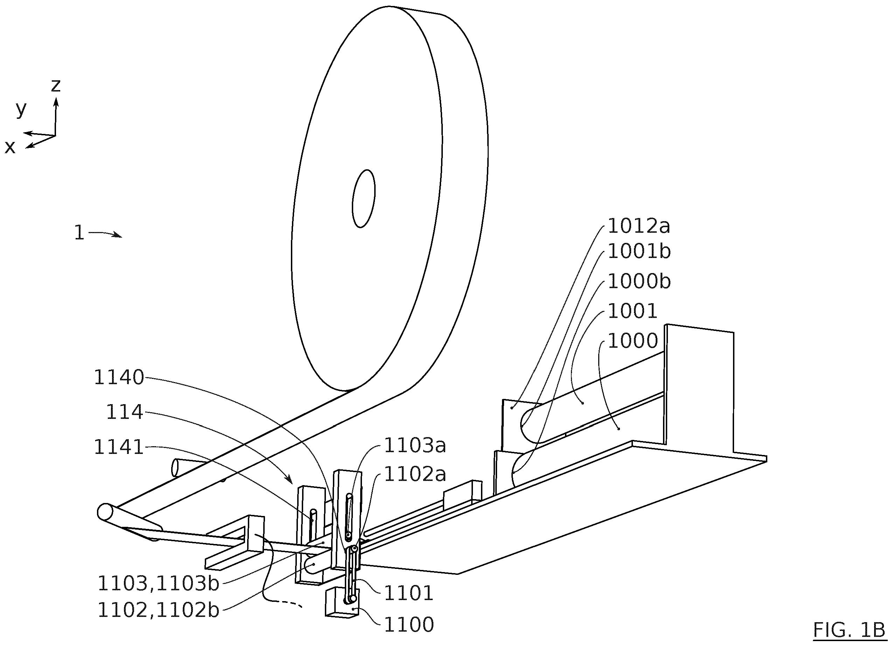

Pour entrainer en translation la plaque coulissante 1012 selon la direction x₁, l'organe de déplacement 100 peut comprendre un deuxième actionneur linéaire 1001, par exemple un vérin. Cet actionneur peut être monté par une première portion, et de préférence par une première extrémité 1001a, au châssis 102. L'actionneur linéaire 1001 peut être monté par une deuxième portion, et de préférence par une deuxième extrémité 1001b, à la plaque coulissante 1012, et plus particulièrement à sa paroi 1012a, comme illustré en figure 1B.

Plus particulièrement, la cinématique d'action du premier actionneur linéaire 1000 et du deuxième actionneur linéaire 1001 peut être la suivante. Le premier actionneur linéaire 1000, relié à la mâchoire 1010, peut être actionné en entrainant le deuxième actionneur 1001, par exemple un vérin éjecteur alors libre de pression. Une fois l'organe de maintien passé dans la configuration de libération et l'étiquette 2 placée, le deuxième actionneur 1001 est actionné, par exemple mis en pression, et le premier actionneur linéaire 1000 recule, de façon à induire un décalage en position entre la plaque coulissante 1012 et la mâchoire 1010. Quand le premier actionneur linéaire 1000 atteint une certaine position de course entre la position de placement et la position de chargement, par exemple lorsqu'il est détecté au niveau d'un capteur, le deuxième actionneur 1001 peut être désactivé, par exemple la pression dans cet actionneur retombe. Le premier actionneur 1000 peut alors ramener le deuxième actionneur 1001 dans la position de chargement.

Selon l'exemple illustré dans les figures 1A, 1B et 2, afin d'éviter un désaxement du dispositif de placement 10 lors du mouvement des actionneurs linéaires 1000, 1001, ces actionneurs peuvent être superposés l'un à l'autre selon l'axe z, en étant fixés par leur première extrémité 1000a, 1001a sur une paroi 1020 verticale du châssis 1012. Le premier actionneur 1000 et le deuxième actionneur 1001 peuvent être fixés par une paroi verticale 1010a', 1012a respectivement au membre inférieur 1010a de la mâchoire 1010 et à la plaque coulissante 1012.

Le dispositif de fourniture 11 de l'étiquette 2, séparable du dispositif de placement, est maintenant décrit en détail selon un mode de réalisation du système 1 et permet la fourniture de l'étiquette 2, voire sa préparation en amont de sa fourniture, selon un mode de réalisation du procédé de préparation d'étiquette. Le dispositif de fourniture 11 de l'étiquette 2, comprend tout d'abord un organe d'entrainement 110 configuré pour entrainer l'étiquette 2 selon une première direction d'entrainement x₂. L'étiquette peut plus particulièrement se présenter sous la forme d'un ruban 20 comprenant une pluralité d'étiquettes 2 enroulées sous forme d'une bobine. L'organe d'entrainement 110 peut être configuré pour dérouler le ruban 20 en l'entrainant selon la première direction d'entrainement x₂.

Le dispositif de fourniture 11 comprend en outre un organe d'orientation 111 du ruban 20, configuré pour orienter le ruban 20 selon une deuxième direction d'entrainement y₁ distincte de la première direction d'entrainement x₂. Pour cela, l'organe d'orientation 111 comprend un renvoi d'angle 1110 disposé selon un axe non perpendiculaire à la première direction d'entrainement x₂. Selon l'exemple illustré par la figure 1A, le renvoi d'angle 1110 peut être un cylindre disposé sensiblement à 45° de la première direction d'entrainement x₂, le ruban coulissant sur une partie de la circonférence du cylindre, pour être orienté dans la deuxième direction y₁, orthogonale à la première x₂.

L'organe d'orientation 111 peut plus particulièrement être configuré pour coopérer avec le dispositif de placement 10, de sorte que l'étiquette soit fournie de façon automatisée au dispositif de placement 10. De préférence, la deuxième direction d'entrainement y₁ est confondue avec la direction de chargement y₁ de l'étiquette dans l'organe de maintien 101. La direction de chargement y₁ pouvant être à la fois orthogonale à la première direction d'entrainement x₂ et au mouvement de translation du dispositif de placement selon la direction x₁, le dispositif de fourniture 11 et le dispositif de placement 10 peuvent ainsi être configuré de façon à augmenter la compacité du système 1. Dès lors, la manipulation du système 1 par un opérateur, voire son installation sur une ligne standard de fabrication du support 3, est facilitée. Par exemple, la largeur du système 1 est d'environ 150 mm.

Sur l'exemple illustré par les figures 1A, 1B et 2, le renvoi d'angle 1110 est configuré pour orienter le ruban 20 vers la droite, par rapport au ruban 20 enroulé sous forme de bobine. Notons que le dispositif de fourniture 11 peut être conçu pour être monté indépendamment pour orienter le ruban 20 vers la gauche ou la droite, de façon à s'adapter à l'espace disponible.

Pour entrainer le ruban 20 dans la première direction d'entrainement x₂, puis dans la deuxième direction d'entrainement y₁ après le renvoi d'angle 1110, l'organe d'entrainement 110 peut comprendre une pluralité de rouleaux, destinés à être en contact avec le ruban 20 et mobiles en rotation autour d'une direction perpendiculaire à la direction d'entrainement du ruban 20. Au moins un rouleau peut être entrainé en rotation par un moteur 1100, par exemple par une courroie 1101 comme illustré en figure 1B. De préférence le moteur 1100 est un moteur électrique pas à pas. L'au moins un rouleau est en outre configuré pour entrainer à son tour un mouvement de translation du ruban 20 dans au moins une direction d'entrainement. Ce rouleau peut être disposé soit avant soit après le renvoi d'angle 1110, pour entrainer le ruban 20 soit la première direction d'entrainement x₂, soit dans la deuxième direction d'entrainement y₁, et induire la progression du ruban 20 dans l'ensemble du système 1. D'autres rouleaux peuvent être ajoutés le long de la course du ruban 20 pour le guider.

Selon un mode de réalisation particulier, l'organe d'entrainement comprend une paire de rouleaux, avec un rouleau inférieur 1102 entrainé en rotation via son extrémité 1102a par le moteur 1100, et un rouleau supérieur 1103, chaque rouleau étant en contact avec une face du ruban 20. Ainsi, la transmission du mouvement du rouleau 1102 au ruban 20 est facilitée. Au moins un rouleau, et de préférence le rouleau inférieur 1102, peut présenter une surface 1102b rugueuse, par exemple un grip ou un revêtement rugueux en silicone, pour favoriser encore cette transmission du mouvement. En outre, cette paire de rouleaux peut assurer un alignement du ruban 20 avec l'organe de maintien 101, et plus particulièrement pour assurer l'insertion du ruban 20 dans la mâchoire 1010. Pour cela, cette paire de rouleaux peut être disposée à proximité de l'organe de maintien 101, et notamment de la mâchoire 1010, le long de la direction d'entrainement y₁.

Le rouleau 1102 inférieur peut en outre être configuré pour être fixe par rapport au système 1, alors que le rouleau supérieur 1103 peut présenter une mobilité relative en translation par rapport au rouleau inférieur 1102, selon une direction verticale, de façon à être en contact avec une face supérieure du ruban 20 y compris lors de variation de l'épaisseur de l'étiquette 2. Ainsi, le système 1 peut s'accommoder à des étiquettes 20 d'épaisseurs différentes. Les variations d'épaisseur pouvant être accommodées sont typiquement de l'ordre de 1,5 à 2 mm. Notons que de façon alternative, on peut prévoir que les positions relatives de ces deux rouleaux soient inversées.

Pour permettre la mobilité relative du rouleau supérieur 1103, le dispositif de fourniture 11 peut comprendre un organe d'adaptation en épaisseur 114, sur lequel au moins le rouleau supérieur 1103 est monté. Le rouleau inférieur peut en outre être monté fixe sur l'organe d'adaptation en épaisseur 114. Selon l'exemple illustré en figure 1B, l'organe d'adaptation peut être formé de deux profils présentant chacun un trou 1140 dans lequel chaque extrémité 1102a du rouleau inférieur 1102 est insérée. Chaque profil peut présenter une rainure 1141 s'étendant verticalement, et dans laquelle chaque extrémité 1103a du rouleau supérieur 1103 est insérée. L'organe d'adaptation en épaisseur 114 peut en outre comprendre un ressort inséré dans chaque profil, chaque ressort étant en appui par une première portion, voire une première extrémité, sur chaque extrémité 1103a du rouleau supérieur 1103, de façon à maintenir en contact la surface 1103b du rouleau supérieur 1103 avec la face supérieure du ruban 20. Il peut être envisagé en outre qu'une deuxième portion, voire une deuxième extrémité de chaque ressort soit reliée à un élément de réglage de la raideur du ressort.

Le dispositif de fourniture 11 peut être configuré pour désolidariser chaque étiquette 2 du ruban 20. Pour cela, le dispositif de fourniture 11 peut comprendre un organe de découpe 112. De préférence, l'organe de découpe est disposé entre l'organe d'entrainement 110 et l'organe de maintien 101, de sorte que l'organe entrainement 110 insère une étiquette 2 du ruban 20 dans l'organe de maintien 101, et que l'organe de découpe 112 découpe le ruban 20 pour désolidariser cette étiquette 2. L'organe de découpe 112 s'actionne de préférence lorsque l'organe de maintien 101 est dans la configuration de maintien de l'étiquette 2. La découpe est ainsi effectuée de manière plus fiable par le système 1. Notamment, le risque que l'étiquette se décale lors de la découpe est minimisé, voire évité, ce qui limite le risque d'endommager le circuit RFID de l'étiquette.

La découpe est de préférence mécanique, ce qui permet un gain de coût et une facilitation de la maintenance de l'organe de découpe. Selon l'exemple illustré dans la figure 1A, l'organe de découpe 112 est formé d'une guillotine 1120 mobile verticalement en translation. En alternative, on peut prévoir l'organe de découpe soit formé d'un actionneur de type ciseaux. En alternative, la découpe peut être non-mécanique, par exemple par ultra-son ou par laser.

Un module de détection 115 peut coopérer avec l'organe de découpe 112 pour coordonner son actionnement. À partir d'un ruban 20, le système 1 permet ainsi la séparation de chaque étiquette 2 de façon automatisée, par exemple pour leur fourniture à l'organe de maintien 101. Plus particulièrement, le module de détection 115 peut détecter une zone interstitielle 21 entre deux étiquettes 2 successives du ruban 20. Cette zone interstitielle 21 peut notamment être une marque optique, comme un trait d'impression ou un changement d'aspect du tissu du ruban, par exemple suite à une cautérisation du tissu. Pour la détecter, le module de détection 115 peut comprendre un capteur optique 1150, de préférence disposé le long de la deuxième direction d'entrainement y₁.

Après une avance rapide correspondant à une fraction, par exemple paramétrable, de la longueur de l'étiquette 2, le moteur 1100 peut diminuer la vitesse d'entrainement du ruban 20 jusqu'à la détection de la zone interstitielle 21 par le module de détection 115. Le ruban 20 peut ensuite être entraîné d'un pas fixe correspondant à la distance entre le module de détection 115 et l'organe de découpe 112. Le risque d'une mauvaise découpe est minimisé, voire évité. De préférence, le module de détection 115 est préférentiellement placé après l'organe d'entrainement 110 afin de minimiser la distance entre le module de détection 115 et l'organe de découpe 112.

Par ailleurs, le dispositif de fourniture 11 peut comprendre un module de vérification 113, configuré pour détecter une marque 22 caractéristique d'un défaut de l'étiquette 2 et coopérer avec le dispositif de placement 10 afin de ne pas placer l'étiquette 2 sur le support 3. Le module de vérification 113 permet d'éviter de placer, voire de fixer, une étiquette 2 défectueuse sur le support. L'efficacité de préparation des étiquettes peut donc être maximisée.

La marque 22 peut notamment être une marque optique, telle qu'une marque d'impression ou une altération de l'étiquette 2, comme un trou percé dans l'étiquette. Selon un exemple, cette marque est apposée sur l'étiquette 2 lors d'une vérification de l'état de l'étiquette RFID en amont de l'embobinage du ruban 20. Pour détecter cette marque, le module de vérification 113 peut utiliser le capteur optique 1150 du module de détection 115, ce qui évite l'ajout d'un capteur supplémentaire au système 1.

Suite à la détection de cette marque, le dispositif de placement 10 peut éjecter l'étiquette 2. La détection, voire l'éjection d'une étiquette défectueuse peuvent être comprises dans le procédé de préparation d'étiquette. Lorsque l'organe de déplacement 100 est dans la position de chargement, l'organe de maintien 101 étant dans la configuration de libération, la mâchoire 1010 peut être déplacée en translation de la position de chargement à une position d'éjection, selon la direction x₁, la position d'éjection étant plus éloignée de la position de placement que la position de chargement. La plaque coulissante 1012 peut en outre rester fixe. Ainsi, la plaque coulissante 1012 peut être décalée de la position de la mâchoire 1010. Ce décalage de la plaque coulissante 1012 peut favoriser le basculement de l'étiquette 2, par exemple dans un bac de récupération des rebuts placé en dessous.

Afin de piloter l'ensemble des actions du système 1, le système 1 peut comprendre un module de commande, non illustré sur les figures. On peut en outre prévoir que certains modules ou organes du système soient actionnables manuellement, comme l'organe de découpe 112 par exemple. Le module de commande peut en outre comprendre un écran tactile, permettant le paramétrage du système 1, voire des tests manuels.

Le procédé de préparation d'étiquette 2 de radio-identification en vue d'une fixation sur un support 3 est maintenant décrit selon un mode de réalisation. Le procédé utilise le système 1 selon les caractéristiques précédemment énoncées.

Le procédé comprend une fourniture d'au moins une étiquette 2 de radio-identification au dispositif de placement 10, et plus particulièrement à l'organe de maintien. Par le mouvement de l'organe de déplacement 100 de la position de chargement à la position de placement, l'étiquette 2 est positionnée sur le support 3.

La fourniture de l'étiquette 2 peut être réalisée par le dispositif de fourniture 10. L'étiquette 2 peut être fournie sous forme du ruban 20 d'étiquettes 2, par exemple enroulée sous forme de bobine. Préalablement à la fourniture de l'étiquette, le procédé peut comprendre une étape de traitement du ruban 20 de façon à marquer la zone interstitielle 21 entre au moins deux étiquettes successives, et de préférence entre chaque étiquette 2. Ce traitement peut comprendre une cautérisation par ultra-sons du tissu de l'étiquette 2 au niveau de la zone interstitielle 21. La cautérisation permet avantageusement d'éviter un effilochage du tissu de l'étiquette 2 lors de sa découpe.

Notons que le procédé peut comprendre des étapes supplémentaires correspondant aux actions du système 1 décrites précédemment.

L'invention n'est pas limitée aux modes de réalisations précédemment décrits et s'étend à tous les modes de réalisation couverts par les revendications.

Les exemples énoncés décrivent un conditionnement des étiquettes 2 en ruban 20, dans lequel les étiquettes 2 sont solidarisées par leur largeur. On peut prévoir un conditionnement dans lequel les étiquettes 2 sont solidarisées par leur longueur, et une adaptation des dimensions du système 1 pour accommoder ce conditionnement.

### LISTE DES REFERENCES

- 1: Système
- 10: Dispositif de placement
- 100: Organe de déplacement
- 1000: Premier actionneur linéaire
- 1000a: Première extrémité
- 1000b: Deuxième extrémité
- 1001: Deuxième actionneur linéaire
- 1001a: Première extrémité
- 1001b: Deuxième extrémité
- 101: Organe de maintien
- 1010: Mâchoire
- 1010a: Membre inférieur
- 1010a': Paroi
- 1010b: Membre supérieur
- 1010c: Guide de chargement
- 1011: Actionneur linéaire
- 1011a: Première extrémité
- 1011b: Deuxième extrémité
- 1012: Plaque coulissante
- 1012a: Paroi
- 102: Châssis
- 1020: Paroi
- 11: Dispositif de fourniture
- 110: Organe d'entrainement
- 1100: Moteur
- 1101: Courroie
- 1102: Rouleau inférieur
- 1102a: Extrémité
- 1102b: Surface
- 1103: Rouleur supérieur
- 1103a: Extrémité
- 1103b: Surface
- 111: Organe d'orientation
- 1110: Renvoi d'angle
- 112: Organe de découpe
- 1120: Guillotine
- 113: Module de vérification
- 114: Organe d'adaptation en épaisseur
- 1140: Trou
- 1141: Rainure
- 115: Module de détection
- 1150: Capteur optique
- 2: Étiquette RFID
- 20: Ruban d'étiquettes
- 21: Zone interstitielle
- 22: Marque caractéristique d'un défaut
- 3: Support
- W1: largeur du membre inférieur
- W2: largeur de la plaque coulissante
- L1: longueur du membre supérieur

## Revendications

1. Système (1) de préparation d'étiquette (2) de radio-identification en vue d'une fixation sur un support (3), comprenant un dispositif de placement (10) d'au moins une étiquette (2) de radio-identification, configuré de façon à placer l'étiquette (2) sur le support (3), le système étant **caractérisé en ce que** le dispositif de placement (10) comprend :
- un organe de déplacement (100) mobile entre une position de chargement et une position de placement, la position de placement étant distincte de la position de chargement, et
- un organe de maintien (101) présentant une configuration de libération de l'étiquette (2), et une configuration de maintien de l'étiquette (2), l'organe de maintien (101) étant dans la configuration de maintien de l'étiquette lors d'un mouvement de l'organe de déplacement (100) entre la position de chargement et la position de placement.

2. Système (1) selon la revendication précédente, dans lequel l'organe de déplacement (100) comprend au moins un actionneur linéaire (1000) solidaire de l'organe de maintien (101), l'actionneur linéaire (1000) étant au moins en partie mobile en translation entre la position de chargement et la position de placement, de façon à déplacer l'organe de maintien (101) entre la position de chargement et la position de placement.

3. Système (1) selon l'une quelconque des revendications précédentes, dans lequel l'organe de maintien (101) comprend une mâchoire (1010) s'étendant transversalement selon une direction de chargement (x₁) de l'étiquette, la mâchoire (1010) comprenant un premier membre (1010a) et un deuxième membre (1010b) espacés d'une première distance (D1) perpendiculaire à la direction de chargement (y₁) lorsque l'organe de maintien (101) est dans la configuration de libération, de sorte que l'étiquette (2) s'insère dans la mâchoire, le premier membre (1010a) et le deuxième membre (1010b) étant espacés d'une deuxième distance (D2) perpendiculaire à la direction de chargement (y) lorsque l'organe de maintien (101) est dans la configuration de maintien, de façon à tenir l'étiquette (2), la première distance (D1) étant supérieure à la deuxième distance (D2).

4. Système (1) selon la revendication précédente, dans lequel le premier membre (1010a) et le deuxième membre (1010b) de la mâchoire (1010) sont configurés de sorte qu'au moins l'un parmi le premier membre (1010a) et le deuxième membre (1010b) présente un degré de liberté en flexion par rapport à l'autre membre, sur au moins un intervalle angulaire.

5. Système (1) selon la revendication précédente, dans lequel au moins une parmi la longueur et la largeur du premier membre (1010a) et du deuxième membre (1010b) est inférieure à au moins une parmi la longueur et la largeur correspondante de l'étiquette (2).

6. Système (1) selon l'une quelconque des revendications 4 et 5, dans lequel l'organe de maintien (101) comprend au moins un actionneur linéaire (1011) dont une première portion (1011a) est mobile en translation de façon à être en appui sur au moins un parmi le premier membre (1010a) et le deuxième membre (1010b), lorsque l'organe de maintien (101) est dans la configuration de maintien.

7. Système (1) selon l'une quelconque des revendications 3 à 6, l'organe de maintien comprenant en outre une plaque coulissante (1012) mobile en translation par rapport à la mâchoire (1010), selon une direction parallèle au mouvement de translation entre la position de chargement et la position de placement, l'organe de déplacement (100) comprenant un actionneur linéaire (1000) solidaire d'au moins une partie de la mâchoire (1010), et un actionneur linéaire (1001) solidaire de la plaque coulissante (1012).

8. Système (1) selon l'une quelconque des revendications précédentes, le système (1) comprenant en outre un dispositif de fourniture (11) comprenant :
- un organe d'entrainement (110) configuré pour entrainer un ruban (20) d'étiquettes (2), selon une première direction d'entrainement (x₂),
- un organe d'orientation (111) du ruban (20) d'étiquettes (2), comprenant un renvoi d'angle (1110) disposé selon un axe non perpendiculaire à la première direction d'entrainement (x₂), de façon à orienter le ruban (20) d'étiquettes (2) selon une deuxième direction d'entrainement (y₁) distincte de la première direction d'entrainement (x₂), et fournir l'étiquette (2) à l'organe de maintien (101).

9. Système (1) selon la revendication précédente, dans lequel, l'organe de maintien (101) comprenant une mâchoire (1010) s'étendant transversalement selon une direction de chargement (y₁) de l'étiquette (2), la deuxième direction d'entrainement (y₁) est parallèle, avec la direction de chargement (y₁) de l'étiquette (2).

10. Système (1) selon l'une quelconque des revendications 8 et 9, dans lequel le dispositif de fourniture (11) comprend en outre un module de détection (115) d'une zone interstitielle (21) entre deux étiquettes (2) successives du ruban (20) d'étiquettes (2).

11. Système (1) selon la revendication précédente, dans lequel le dispositif de fourniture (11) comprend en outre un organe de découpe (112) du ruban (20) d'étiquettes (2), configuré pour coopérer avec le module de détection (115) de façon à découper le ruban (20) d'étiquettes (2) au niveau de la zone interstitielle (21).

12. Système (1) selon la revendication précédente, dans lequel l'organe de découpe (112) est disposé entre le module de détection (115) et l'organe de maintien (101), et configuré pour s'actionner lorsque l'organe de maintien (101) est dans la configuration de maintien de l'étiquette (2).

13. Système (1) selon l'une quelconque des revendications 10 à 12, dans lequel l'organe d'entrainement (101) comprend un moteur (1100) piloté pour entrainer le ruban (20) d'étiquettes (2) à une première vitesse et à une deuxième vitesse, la première vitesse étant supérieure à la deuxième vitesse, de sorte qu'après avoir déplacé l'étiquette (2) sur une distance, ladite distance étant de préférence inférieure à une longueur d'une étiquette (2), le ruban (20) d'étiquettes (2) est entrainé à la deuxième vitesse jusqu'à la détection de la zone interstitielle (21).

14. Système (1) selon l'une quelconque des revendications 8 à 13, dans lequel le dispositif de fourniture 10 comprend en outre un module de vérification (113) configuré pour détecter un défaut de l'étiquette (2), et le dispositif de placement (10) étant configuré pour éjecter l'étiquette (2) du système (1) lorsque le défaut est détecté par le module de vérification (113).

15. Procédé de préparation d'étiquette (2) de radio-identification en vue d'une fixation sur un support (3), par un système (1) de préparation d'étiquette de radio-identification selon l'une quelconque des revendications précédentes, le procédé (4) comprenant :
- une fourniture d'au moins une étiquette (2) de radio-identification à un dispositif de placement (10), le dispositif de placement (10) comprenant un organe de déplacement (100) dans une position de chargement et un organe de maintien (101) dans une configuration de libération de l'étiquette (2), puis
- un passage de l'organe de maintien (101) de la configuration de libération à une configuration de maintien de l'étiquette, puis
- un mouvement de l'organe de déplacement (100) de la position de chargement à une position de placement, la position de placement étant distincte de la position de chargement, de façon à positionner l'étiquette (2) sur le support (3).

## Patentansprüche

1. System (1) zur Vorbereitung eines Funkidentifikationsetiketts (2) für die Befestigung an einem Halter (3), mit einer Platzierungsvorrichtung (10) für mindestens ein Funkidentifikationsetikett (2), die so konfiguriert ist, dass sie das Etikett (2) auf dem Halter (3) platziert, wobei das System **dadurch gekennzeichnet ist, dass** die Platzierungsvorrichtung (10) Folgendes umfasst:
- Ein Verschiebungsorgan (100), das zwischen einer Ladeposition und einer Platzierungsposition beweglich ist, wobei die Platzierungsposition von der Ladeposition getrennt ist, und
- ein Rückhalteorgan (101), das eine Konfiguration zum Freigeben des Etiketts (2) und eine Konfiguration zum Rückhalten des Etiketts (2) aufweist, wobei sich das Rückhalteorgan (101) bei einer Bewegung des Verschiebungsorgans (100) zwischen der Ladeposition und der Platzierungsposition in der Konfiguration zum Rückhalten des Etiketts befindet.

2. System (1) nach dem vorhergehenden Anspruch, bei dem das Verschiebungsorgan (100) mindestens ein lineares Stellglied (1000) umfasst, das fest mit dem Rückhalteorgan (101) verbunden ist, wobei das lineare Stellglied (1000) mindestens teilweise translatorisch zwischen der Ladeposition und der Platzierungsposition beweglich ist, um das Rückhalteorgan (101) zwischen der Ladeposition und der Platzierungsposition zu verschieben.

3. System (1) nach einem der vorhergehenden Ansprüche, bei dem das Rückhalteorgan (101) eine Klemmbacke (1010) umfasst, die sich quer zu einer Laderichtung (x₁) des Etiketts erstreckt, wobei die Klemmbacke (1010) ein erstes Glied (1010a) und ein zweites Glied (1010b) umfasst, die um einen ersten Abstand (D1) senkrecht zur Laderichtung (y₁) voneinander beabstandet sind, wenn sich das Rückhalteorgan (101) in der Freigabekonfiguration befindet, so dass das Etikett (2) in die Klemmbacke passt, wobei das erste Glied (1010a) und das zweite Glied (1010b) um einen zweiten Abstand (D2) senkrecht zur Laderichtung (y) beabstandet sind, wenn sich das Rückhalteorgan (101) in der Haltekonfiguration befindet, um das Etikett (2) zu halten, wobei der erste Abstand (D1) größer als der zweite Abstand (D2) ist.

4. System (1) nach dem vorhergehenden Anspruch, wobei das erste Glied (1010a) und das zweite Glied (1010b) der Klemmbacke (1010) so konfiguriert sind, dass mindestens eines des ersten Glieds (1010a) und des zweiten Glieds (1010b) über mindestens ein Winkelintervall einen Biegefreiheitsgrad in Bezug auf das andere Glied aufweist.

5. System (1) nach dem vorhergehenden Anspruch, wobei mindestens eine der Längen und Breiten des ersten Glieds (1010a) und des zweiten Glieds (1010b) kleiner ist als mindestens eine der entsprechenden Längen und Breiten des Etiketts (2).

6. System (1) nach einem der Ansprüche 4 oder 5, wobei das Rückhalteorgan (101) mindestens einen linearen Aktuator (1011) umfasst, von dem ein erster Abschnitt (1011a) translatorisch beweglich ist, um an mindestens einem von dem ersten Glied (1010a) und dem zweiten Glied (1010b) anzuliegen, wenn sich das Rückhalteorgan (101) in der Rückhaltekonfiguration befindet.

7. System (1) nach einem der Ansprüche 3 bis 6, wobei das Rückhalteorgan darüber hinaus eine Gleitplatte (1012) umfasst, die in Bezug auf die Klemmbacke (1010) in einer Richtung parallel zur Translationsbewegung zwischen der Ladeposition und der Platzierungsposition translatorisch beweglich ist, wobei das Verschiebungsorgan (100) einen linearen Aktuator (1000), der mit mindestens einem Teil der Klemmbacke (1010) fest verbunden ist, und einen linearen Aktuator (1001) umfasst, der mit der Gleitplatte (1012) fest verbunden ist.

8. System (1) nach einem der vorhergehenden Ansprüche, wobei das System (1) darüber hinaus eine Beschaffungsvorrichtung (11) umfasst, die Folgendes umfasst:
- Ein Antriebselement (110), das so konfiguriert ist, dass es ein Band (20) aus Etiketten (2) entlang einer ersten Antriebsrichtung (x₂) antreibt,
- ein Orientierungsorgan (111) des Bandes (20) von Etiketten (2), das eine Winkelumlenkung (1110) umfasst, die entlang einer Achse angeordnet ist, die nicht senkrecht zur ersten Antriebsrichtung (x₂) verläuft, um das Band (20) von Etiketten (2) entlang einer zweiten Antriebsrichtung (y₁) zu orientieren, die von der ersten Antriebsrichtung (x₂) verschieden ist, und das Etikett (2) dem Rückhalteorgan (101) zuzuführen.

9. System (1) nach dem vorhergehenden Anspruch, wobei das Rückhalteorgan (101) eine Klemmbacke (1010) umfasst, die sich quer zu einer Laderichtung (y₁) des Etiketts (2) erstreckt, wobei die zweite Antriebsrichtung (y₁) parallel zur Laderichtung (y₁) des Etiketts (2) ist.

10. System (1) nach einem der Ansprüche 8 oder 9, wobei die Beschaffungsvorrichtung (11) außerdem ein Modul (115) zum Erfassen eines Zwischenbereichs (21) zwischen zwei aufeinanderfolgenden Etiketten (2) des Bandes (20) aus Etiketten (2) umfasst.

11. System (1) nach dem vorhergehenden Anspruch, bei dem die Beschaffungsvorrichtung (11) darüber hinaus ein Organ (112) zum Schneiden des Bandes (20) von Etiketten (2) umfasst, das so konfiguriert ist, dass es mit dem Modul (115) zum Erfassen zusammenwirkt, um das Band (20) von Etiketten (2) an dem Zwischenbereich (21) abzuschneiden.

12. System (1) nach dem vorhergehenden Anspruch, wobei das Organ (112) zum Schneiden zwischen dem Modul (115) zum Erfassen und dem Rückhalteorgan (101) angeordnet und so konfiguriert ist, dass es betätigt wird, wenn sich das Rückhalteorgan (101) in der Konfiguration zum Rückhalten des Etiketts (2) befindet.

13. System (1) nach einem der Ansprüche 10 bis 12, wobei das Antriebselement (101) einen Motor (1100) umfasst, der so angesteuert wird, dass er das Band (20) aus Etiketten (2) mit einer ersten Geschwindigkeit und einer zweiten Geschwindigkeit antreibt, wobei die erste Geschwindigkeit höher ist als die zweite Geschwindigkeit, so dass nach dem Bewegen des Etiketts (2) um eine Strecke, wobei die Strecke vorzugsweise kleiner als eine Länge eines Etiketts (2) ist, das Band (20) aus Etiketten (2) mit der zweiten Geschwindigkeit angetrieben wird, bis der Zwischenbereich (21) erfasst wird.

14. System (1) nach einem der Ansprüche 8 bis 13, wobei die Beschaffungsvorrichtung 10 darüber hinaus ein Prüfmodul (113) umfasst, das so konfiguriert ist, dass es einen Defekt des Etiketts (2) erkennt, und wobei die Platzierungsvorrichtung (10) so konfiguriert ist, dass sie das Etikett (2) aus dem System (1) ausstößt, wenn der Defekt durch das Prüfmodul (113) erkannt wird.

15. Verfahren zur Vorbereitung eines Funkidentifikationsetiketts (2) zur Befestigung an einem Halter (3) durch ein System (1) zur Vorbereitung eines Funkidentifikationsetiketts nach einem der vorhergehenden Ansprüche, wobei das Verfahren (4) Folgendes umfasst:
- Eine Bereitstellung mindestens eines Funkidentifikationsetiketts (2) für eine Platzierungsvorrichtung (10), wobei die Platzierungsvorrichtung (10) ein Verschiebungsorgan (100) in einer Ladeposition und ein Rückhalteorgan (101) in einer Konfiguration zum Freigeben des Etiketts (2) aufweist, und anschließend
- ein Übergang des Rückhalteorgans (101) von der Freigabekonfiguration zu einer Konfiguration, in der das Etikett gehalten wird, und anschließend
- eine Bewegung des Verschiebungsorgans (100) von der Ladeposition in eine Platzierungsposition, wobei die Platzierungsposition von der Ladeposition verschieden ist, um das Etikett (2) auf dem Halter (3) zu positionieren.

## Claims

1. A system (1) for preparing a radiofrequency identification tag (2) for attachment on a support (3), comprising a device (10) for placing at least one radiofrequency identification tag (2), configured so as to place the tag (2) on the support (3), the system being **characterised in that** the placement device (10) comprises:
- an actuation member (100) movable between a loading position and a placement position, the placement position being distinct from the loading position, and
- a holding member (101) having a release configuration of the tag (2), and a holding configuration of the tag (2), the holding member (101) being in the holding configuration of the tag upon a movement of the actuation member (100) between the loading position and the placement position.

2. The system (1) according to the preceding claim, wherein the actuation member (100) comprises at least one linear actuator (1000) secured to the holding member (101), the linear actuator (1000) being at least partially movable in translation between the loading position and the placement position, so as to move the holding member (101) between the loading position and the placement position.

3. The system (1) according to any one of the preceding claims, wherein the holding member (101) comprises a jaw (1010) extending transversely according to a loading direction (x₁) of the tag, the jaw (1010) comprising a first member (1010a) and a second member (1010b) spaced apart by a first distance (D1) perpendicular to the loading direction (y₁) when the holding member (101) is in the release configuration, so that the tag (2) fits into the jaw, the first member (1010a) and the second member (1010b) being spaced apart by a second distance (D2) perpendicular to the loading direction (y) when the holding member (101) is in the holding configuration, so as to hold the tag (2), the first distance (D1) being larger than the second distance (D2).

4. The system (1) according to the preceding claim, wherein the first member (1010a) and the second member (1010b) of the jaw (1010) are configured so that at least one amongst the first member (1010a) and the second member (1010b) has a degree of freedom in bending with respect to the other member, over at least one angular interval.

5. The system (1) according to the preceding claim, wherein at least one amongst the length and the width of the first member (1010a) and of the second member (1010b) is smaller than at least one amongst the corresponding length and width of the tag (2).

6. The system (1) according to any one of claims 4 and 5, wherein the holding member (101) comprises at least one linear actuator (1011) a first portion (1011a) of which is movable in translation so as to bear on at least one amongst the first member (1010a) and the second member (1010b) when the holding member (101) is in the holding configuration.

7. The system (1) according to any one of claims 3 to 6, the holding member further comprising a sliding plate (1012) movable in translation relative to the jaw (1010), according to a direction parallel to the translational movement between the loading position and the placement position, the actuation member (100) comprising a linear actuator (1000) secured to at least one portion of the jaw (1010), and a linear actuator (1001) secured to the sliding plate (1012).

8. The system (1) according to any one of the preceding claims, the system (1) further comprising a supply device (11) comprising:
- a drive member (110) configured to drive a tag (2) strip (20), according to a first drive direction (x₂);
- a member (111) for orienting the tag (2) strip (20), comprising a deflector (1110) disposed according to an axis that is not perpendicular to the first drive direction (x₂), so as to orient the tag (2) strip (20) according to a second drive direction (y₁) distinct from the first drive direction (x₂), and to supply the tag (2) to the holding member (101).

9. The system (1) according to the preceding claim, wherein, the holding member (101) comprising a jaw (1010) extending transversely according to a loading direction (y₁) of the tag (2), the second drive direction (y₁) is parallel, with the loading direction (y₁) of the tag (2).

10. The system (1) according to any one of claims 8 and 9, wherein the supply device (11) further comprises a module (115) for detecting an interstitial area (21) between two successive tags (2) of the tag (2) strip (20).

11. The system (1) according to the preceding claim, wherein the supply device (11) further comprises a member (112) for cutting the tag (2) strip (20), configured to cooperate with the detection module (115) so as to cut the tag (2) strip (20) at the interstitial area (21).

12. The system (1) according to the preceding claim, wherein the cutting member (112) is disposed between the detection module (115) and the holding member (101), and is configured to be actuated when the holding member (101) is in the holding configuration of the tag (2).

13. The system (1) according to any one of claims 10 to 12, wherein the drive member (101) comprises a motor (1100) controlled to drive the tag (2) strip (20) at a first speed and at a second speed, the first speed being higher than the second speed, so that after having moved the tag (2) over a given distance, said distance being shorter than a length of a tag (2), the tag (2) strip (20) is driven at the second speed until detection of the interstitial area (21).

14. The system (1) according to any one of claims 8 to 13, wherein the supply device 10 further comprises a verification module (113) configured to detect a defect of the tag (2), and the placement device (10) being configured to eject the tag (2) from the system (1) when the defect is detected by the verification module (113).

15. A method for preparing a radiofrequency identification tag (2) for attachment on a support (3), by a radiofrequency identification tag preparation system (1) according to any one of the preceding claims, the method (4) comprising:
- supplying at least one radiofrequency identification tag (2) to a placement device (10), the placement device (10) comprising an actuation member (100) in a loading position and a holding member (101) in a tag (2) release configuration, then
- switching the holding member (101) from the release configuration into a tag holding configuration, and
- moving the actuation member (100) from the loading position to a placement position, the placement position being distinct from the loading position, so as to position the tag (2) on the support (3).
